# FASCICULE DE BREVET EUROPEEN

(11) **EP 1 286 854 B1**
(45) Date de publication et mention de la délivrance du brevet: **11.08.2004**
(21) Numéro de dépôt: 00929747.4
(22) Date de dépôt: 07.06.2000
(51) Int. Cl.: B60P 1/20, B60P 1/28

(54) **DISPOSITIF BASCULEUR POUR VEHICULE UTILITAIRE**
KIPPVORRICHTUNG FÜR ARBEITSFAHRZEUGE
TIPPER DEVICE FOR A UTILITY VEHICLE

(43) Date de publication de la demande: 05.03.2003
(73) Titulaire: INTERPATENT ANSTALT, FL-9490 VADUZ (LI)
(72) Inventeur: ROCHER, Robert, F-42480 La Fouillouse (FR)
(74) Mandataire: Micheli & Cie
(86) Numéro de dépôt international: PCT/IB2000/000758
(87) Numéro de publication internationale: WO 2001/094152

(56) Documents cités:
- FR-A- 1 444 886
- FR-A- 1 459 863
- FR-A- 1 531 542
- FR-A- 1 560 580
- NL-A- 296 390
- PATENT ABSTRACTS OF JAPAN vol. 008, no. 035 (M-276), 15 février 1984 (1984-02-15) & JP 58 191641 A (SHINMEIWA KOGYO KK), 8 novembre 1983 (1983-11-08)

## Description

La présente invention a pour objet un dispositif basculeur principalement destiné à équiper une semi remorque, un camion ou tout autre véhicule utilitaire. Ce dispositif est prévu pour permettre le basculement d'une benne, d'un conteneur, d'une plate-forme de manutention ou plus généralement d'une charge volumineuse quelconque.

Les dispositifs connus équipant par exemple les semi-remorques sont de deux types différents. Une première catégorie concerne des dispositifs de basculement à vérin télescopique frontal qui prévoient un vérin situé à l'avant du véhicule agissant sur l'extrémité avant d'une benne elle-même articulée à l'arrière du châssis du véhicule. Ces dispositifs à vérin frontal présentent plusieurs inconvénients qui peuvent être résumés comme suit. La disposition du vérin à l'avant de la caisse implique que la course du vérin doit être importante afin d'obtenir un angle de basculement suffisant pour les caisses de grandes longueurs telles celles utilisées sur les semi-remorques. La taille de ce vérin frontal et le volume d'huile nécessaire à son fonctionnement augmente la masse placée à l'avant de la caisse de sorte que lorsque le vérin est complètement déployé, en position de basculement, on constate une élévation du centre de gravité, ce qui est préjudiciable à la stabilité lors de basculements en dévers par exemple.

Un autre inconvénient résulte du fait que le point d'application de l'effort de levage sur l'avant de la benne conduit à des contraintes de flexion importantes sur la caisse ou le faux châssis portant la benne. Il en résulte une augmentation du poids mort. D'autre part les vérins télescopiques frontaux de grand débattement sont des organes vulnérables et fragiles.

D'autres dispositifs basculeurs sont de type dit à compas. Ils comportent une poutre solidaire du châssis ainsi qu'un faux châssis porteur portant la benne ou la caisse et qui est articulé à l'arrière du véhicule. Un vérin central permet d'écarter les deux branches du compas ainsi formé et de faire basculer la benne. Ces dispositifs doivent être équipés d'un vérin ou d'un groupe de vérins de forte dimension car la pression de décollage est très élevée.

On connaît également par le document FR-A-1 531 542 un dispositif de basculement comportant deux bras articulés respectivement au châssis du véhicule et à l'élément à basculer, ces deux bras étant par ailleurs articulés l'un à l'autre pour former un compas et reliés au châssis du véhicule par, respectivement, deux vérins.

Le but de la présente invention est de palier aux inconvénients précités en proposant un dispositif basculeur dont les organes présentent des dimensions réduites par rapport aux dispositifs basculeurs existant.

Un autre but de l'invention consiste à abaisser le centre de gravité de l'ensemble lorsque la benne est en position basculée.

Enfin, un autre but de l'invention est de pouvoir réduire la pression de décollage dans la phase initiale du mouvement.

Ces buts et d'autres qui seront apparents au vu de la description qui suit sont obtenus par le dispositif basculeur selon la présente invention qui se distingue par les caractéristiques énumérées à la revendication 1.

Grâce à ce dispositif, la taille des vérins peut être réduite sensiblement, de même que la pression de décollage nécessaire obtenue par la décomposition du mouvement en deux phases distinctes. Les efforts sur les attaches ainsi que les contraintes de flexion sur le châssis porteur ou directement sur la benne sont grandement diminués par rapport aux réalisations existantes.

Le dessin annexé illustre schématiquement et à titre d'exemple une forme d'exécution du dispositif basculeur selon l'invention.

La figure 1 est une vue de côté du dispositif basculeur en position de repos ou repliée.

La figure 2 est une vue de côté illustrant le dispositif dans la première phase de basculement.

La figure 3 est une vue de côté illustrant le dispositif dans la seconde phase de basculement.

Les figures 4 et 5 sont des vues en perspective illustrant le dispositif basculeur respectivement dans la première et la seconde phase de basculement.

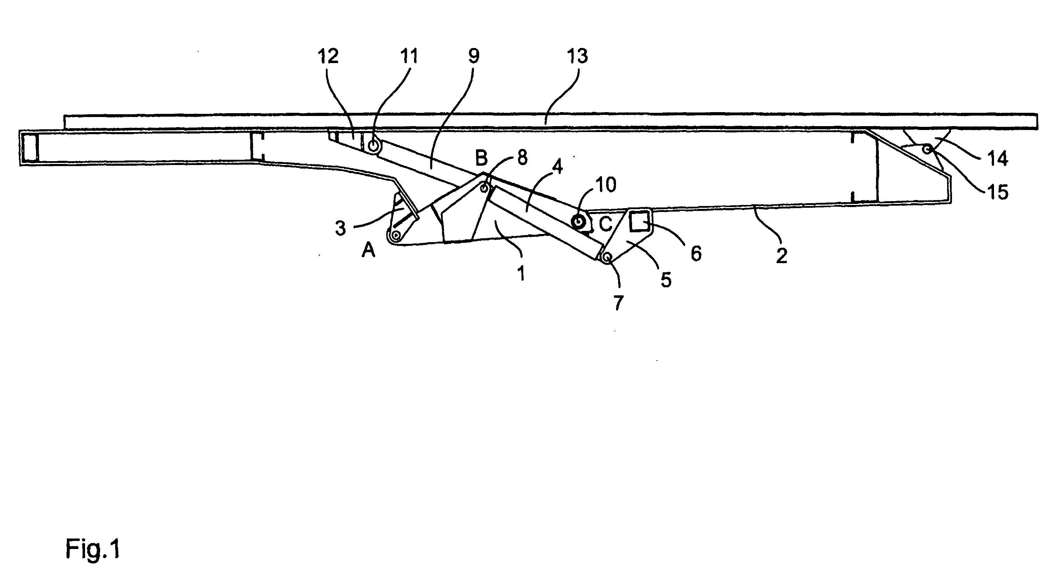

En référence à la figure 1, un cadre amplificateur 1 de forme triangulaire est relié par son sommet avant A au châssis 2 de la remorque par l'intermédiaire d'un axe traversant une chape d'articulation 3. Les cylindres de deux vérins 4 sont fixés rigidement par l'intermédiaire de pattes de fixation 5 à une poutre 6 solidaire du châssis 2. La liaison entre l'extrémité arrière des vérins 4 et les pattes de fixation 5 est réalisée au moyen d'un axe 7. Les tiges situées à l'autre extrémité de ces vérins 4 sont reliées au sommet supérieur B du cadre amplificateur 1 par l'intermédiaire d'un axe 8. Un troisième vérin 9, qui dans une variante peut être constitué d'un groupe de vérins jumelés, est articulé au moyen d'un axe 10 au sommet arrière C du cadre d'amplification 1. L'autre extrémité de ce vérin 9 est articulée au moyen d'un axe 11 sur une chape de poussée 12 fixée rigidement au cadre basculant 13 supportant la benne (non représentée). Le cadre basculant 13 est lui-même articulé au moyen de chapes d'articulation 14 et d'un axe 15 sur l'arrière du châssis 2 du véhicule. Dans une variante, la tige du vérin 9 peut être fixée directement à une benne articulée à l'arrière du véhicule, sans cadre basculant.

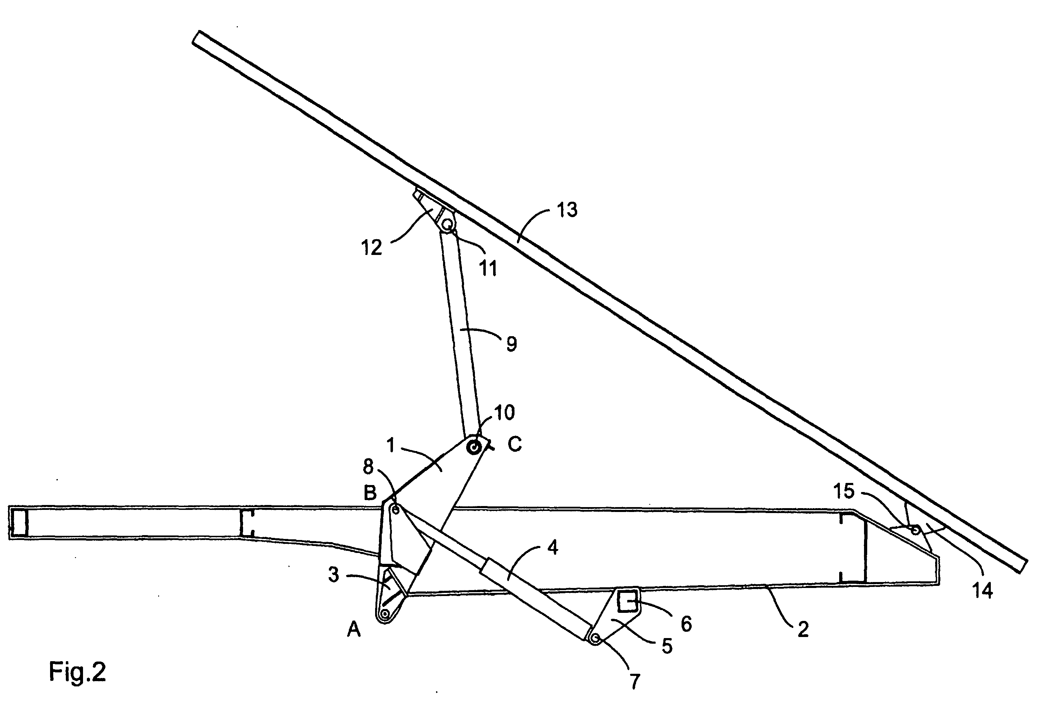

La figure 2 illustre le dispositif basculeur à l'issue de la première phase de basculement après la mise en oeuvre des vérins 4. Sous la poussée des deux vérins 4, le cadre amplificateur 1 pivote autour de l'axe traversant la chape d'articulation 3. Dans son déplacement, le cadre amplificateur 1 entraîne le vérin 9 relié à son sommet arrière C. Dans cette phase du déplacement, le vérin 9 joue le rôle d'un timon de poussée et transmet la poussée au cadre basculant 13 par l'intermédiaire de la chape 12. Cette chape de poussée 12 est reliée au cadre basculant 13 en un point situé entre le milieu du cadre basculant 13 et la partie avant de ce dernier. Dans un mode d'exécution préféré, la distance séparant l'extrémité avant du cadre 13 et l'attache de la chape de poussée 12 correspond à environ un tiers de la longueur du cadre 13.

Dans cette position optimale, les contraintes de flexion exercées sur le cadre basculant ou directement sur la benne de la semi remorque sont réduites au maximum.

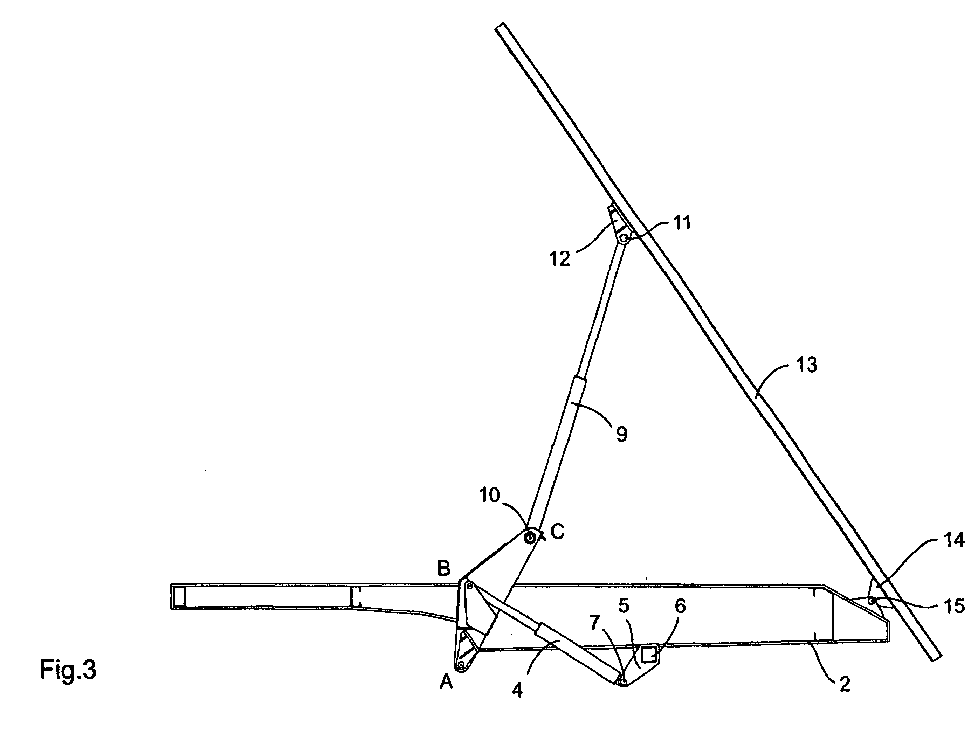

La figure 3 illustre la deuxième phase de basculement, obtenue par le déploiement du vérin 9. On notera que ce vérin 9 n'a plus d'efforts importants à fournir puisqu'il est délesté d'une partie de la charge, le centre de gravité s'étant déplacé vers l'arrière du dispositif. Ceci contribue à la réduction des masses mises en oeuvre et permet de réduire le coût du dispositif tout en assurant une sécurité maximale.

On prévoit le branchement en parallèle de tous les vérins 4,9 à partir d'une source d'alimentation sous pression commune par l'intermédiaire d'une vanne trois voies ou de deux vannes deux voies permettant la sortie sous pression et la rentrée par gravité du basculeur. Grâce à cet agencement, on envoie simultanément la pression dans tous les vérins 4,9, l'ordre de fonctionnement des vérins étant automatiquement imposé prioritairement aux vérins 4 de par leur positionnement géométrique.

Dans un mode préféré, on utilise des vérins 4,9 à double effet mais travaillant en simple effet. Ceci permet de réduire la taille et le poids des vérins pour un effort donné et permet d'éliminer les organes d'une distribution double effet.

Si la masse des éléments basculants s'avère trop faible pour permettre un retour à la position de marche par gravitation, on peut également prévoir dans une autre forme d'exécution une alimentation traditionnelle à double effet afin d'exercer un effort de rappel sur le cadre basculant ou la benne.

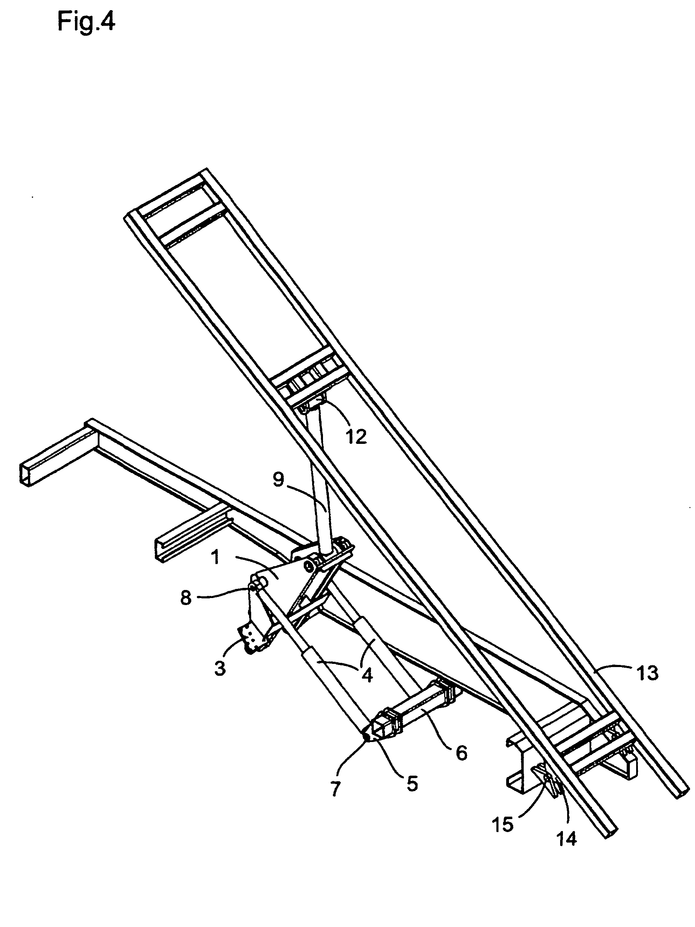

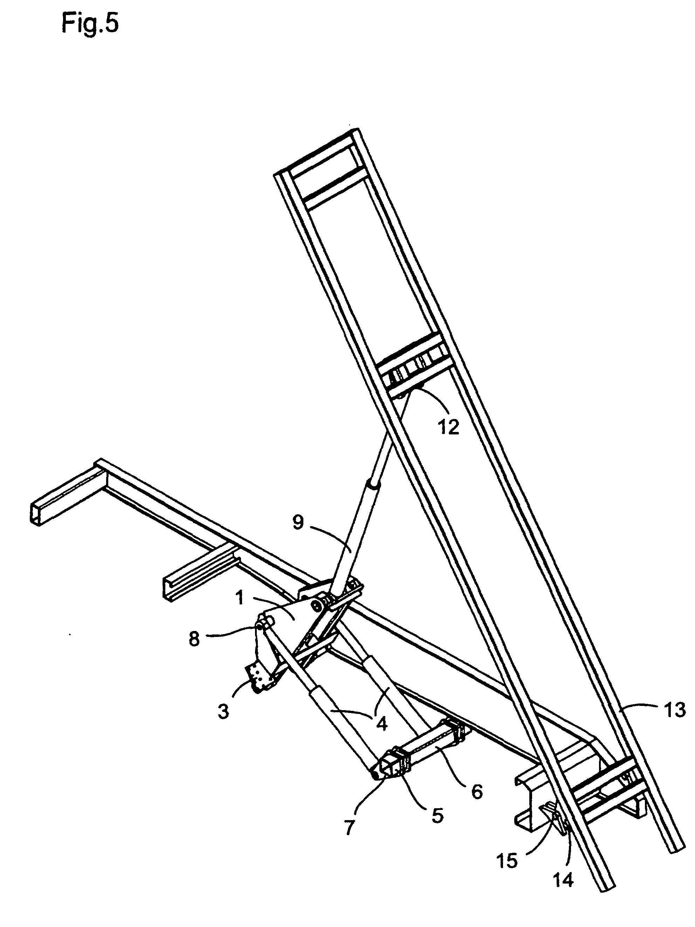

Les figures 4 et 5 illustrent le dispositif basculeur en perspective, respectivement dans la première et la seconde phase de basculement. On notera toutefois que l'angle de basculement obtenu à l'issue de la première phase de basculement est déjà de l'ordre de 32 degrés, et qu'il est compris entre 50 et 60 degrés à l'issue de la seconde phase, après la mise en oeuvre du vérin 9.

La décomposition du mouvement appliqué au cadre de basculement ou à la benne en deux phases dans un ordre imposé permet de réduire considérablement la pression de décollage nécessaire par rapport aux dispositifs connus. De ce fait, les vérins ainsi que les différents circuits de distribution peuvent être dimensionnés en conséquence, ce qui permet de réduire les coûts de l'ensemble du dispositif par rapport à un dispositif à vérin frontal par exemple. Par ailleurs, ce dispositif de basculement permet d'obtenir des angles importants, ce qui constitue un avantage dans le cas de déchargement de produits collants par exemple.

Grâce à cet agencement, on abaisse également le centre de gravité par rapport aux dispositifs existants, ce qui contribue à une meilleure stabilité de l'ensemble lors de basculements effectués en dévers.

A titre de comparaison, le volume d'huile nécessaire au fonctionnement d'un dispositif à vérin frontal est de l'ordre de 4 à 5 fois plus important, respectivement de 20 à 30% supérieur pour un système à compas, que le volume d'huile nécessaire pour un dispositif selon la présente invention. Il en découle que les circuits d'alimentation, les pompes et les organes de distribution-régulation sont moins lourds et moins coûteux que dans les dispositifs existants. Concernant les dispositifs à compas, la masse des organes permettant le basculement est environ deux fois supérieure à celle des organes d'un dispositif à cadre amplificateur selon la présente invention.

Enfin, grâce à la décomposition du mouvement en deux phases, les efforts de flexion apparaissant au niveau de la benne ou du cadre basculant sont fortement diminués par rapport aux basculeurs à vérin frontal ce qui contribue à une augmentation de la durée de vie de tels dispositifs.

Plusieurs variantes constructives peuvent être envisagées, notamment en ce qui concerne le choix des vérins ou leur nombre qui peut être adapté en fonction du véhicule destiné à accueillir un tel dispositif basculeur sans sortir du cadre de l'invention telle que revendiquée.

## Revendications

1. Dispositif basculeur pour véhicule utilitaire, comportant :
- un cadre amplificateur (1) présentant une forme généralement triangulaire, articulé par l'un (A) des sommets de sa base au châssis (2) du véhicule, et
- au moins un premier vérin (4) articulé d'une part au châssis (2) et d'autre part au sommet supérieur (B) du cadre amplificateur (1), de sorte qu'un déploiement du ou des premiers vérins (4) entraîne un pivotement du cadre amplificateur (1) par rapport au châssis (2),
**caractérisé en ce qu'**il comporte en outre un second vérin (9) articulé d'une part à l'autre sommet (C) de la base du cadre amplificateur (1) et d'autre part à l'élément à basculer (13), de sorte que ledit pivotement du cadre amplificateur (1) entraîne le second vérin (9) à pousser l'élément à basculer (13), pour le basculer, l'élément à basculer (13) pouvant être basculé davantage par un déploiement du second vérin (9).

2. Dispositif selon la revendication 1, **caractérisé par le fait que** tous les vérins sont branchés en parallèle sur une source commune d'alimentation sous pression par l'intermédiaire d'une vanne trois voies ou de deux vannes deux voies permettant d'envoyer simultanément la pression dans tous les vérins (4,9), l'ordre de fonctionnement étant automatiquement imposé prioritairement au(x) premier(s) vérin(s) (4) de par son (leur) positionnement géométrique.

3. Dispositif basculeur selon l'une des revendications précédentes,
**caractérisé par le fait que** le point d'attache du second vérin (9) sur l'élément à basculer (13) est situé à environ un tiers de la longueur dudit élément (13) partant de l'extrémité avant de l'élément (13).

4. Dispositif selon l'une des revendications précédentes, **caractérisé par le fait que** l'élément à basculer est constitué d'un cadre de basculement (13) articulé par son extrémité arrière au châssis du véhicule.

5. Dispositif selon l'une des revendications précédentes, **caractérisé par le fait que** les premier(s) et second vérins (4,9) sont des vérins à double effet, utilisés en simple effet.

## Patentansprüche

1. Kippvorrichtung für ein Nutzfahrzeug, welche
- einen Verstärkerrahmen (1) mit einer generell dreieckigen Form, der an einer (A) der Spitzen seiner Grundlinie am Fahrzeuggestell (2) aufgehängt ist, und
- zumindest einen ersten Hebebock (4), welche einerseits am Gestell (2) und andererseits an der oberen Spitze (B) des Verstärkerrahmens (1) derart aufgehängt ist, daß ein Entfalten des/der ersten Hebebocks/-böcke (4) eine Drehung des Verstärkerrahmens (1) relativ zum Gestell (2) bewirkt, aufweist,
**dadurch gekennzeichnet, daß** sie weiterhin einen zweiten Hebebock (9) aufweist, welcher einerseits an der anderen Spitze (C) der Grundlinie des Verstärkerrahmens (1) und andererseits am zu kippenden Element (13) derart aufgehängt ist, daß die besagte Drehung des Verstärkerrahmens (1) bewirkt, daß der zweite Hebebock (9) das zu kippende Element (13) antreibt, um es zu kippen, wobei das zu kippende Element (13) durch Entfalten des zweiten Hebebocks (9) weiter gekippt werden kann.

2. Vorrichtung gemäß Anspruch 1, **dadurch gekennzeichnet, daß** alle Hebeböcke über ein Dreiwegeventil oder zwei Zweiwegeventile parallel an einer gemeinsamen Druckversorgungsquelle angeschlossen sind, was die gleichzeitige Versorgung aller Hebeböcke (4, 9) mit Druck erlaubt, wobei die Betriebsreihenfolge mit einer Priorität für den/die ersten Hebebock/-böcke (4) durch deren geometrische Positionierung automatisch vorgegeben ist.

3. Kippvorrichtung gemäß einem der vorhergehenden Ansprüche, **dadurch gekennzeichnet, daß** der Befestigungspunkt des zweiten Hebebocks (9) an dem zu kippenden Element (13) bei etwa einem Drittel der Länge des besagten Elements (13) ausgehend vom vorderen Ende des Elements (13) liegt.

4. Vorrichtung gemäß einem der vorhergehenden Ansprüche, **dadurch gekennzeichnet, daß** das zu kippende Element aus einem Kipprahmen (13) besteht, der an seinem rückwärtigem Ende am Fahrzeuggestell aufgehängt ist.

5. Vorrichtung gemäß einem der vorhergehenden Ansprüche, **dadurch gekennzeichnet, daß** der/die erste(n) Hebebock/-böcke und der zweite Hebebock (4, 9) Hebeböcke mit doppelter Wirkung sind, welche mit einfacher Wirkung benutzt werden.

## Claims

1. A tipper device for a utility vehicle comprising
- an amplifier frame (1) that is generally triangular in shape, being hinged at one (A) of its base vertices to the vehicle chassis (2), and
- at least a first jack (4) being hinged on the one hand to the chassis (2) and on the other hand to the top vertex (B) of the amplifier frame (1), such that deploying of the first jack(s) (4) results in a pivoting of the amplifier frame (1) with respect to the chassis (2),
**characterised by** the fact that it comprises furthermore a second jack (9) being hinged on the one hand to the other vertex (C) of the base of the amplifier frame (1) and on the other hand to the element that is to be tipped (13), such that said pivoting of the amplifier frame (1) results in pushing of the element that is to be tipped (13) by the second jack (9) in order to tilt it, the element that is to be tipped (13) being able to be tilted further by deploying the second jack (9).

2. A device according to claim 1, **characterized by** the fact that all of the jacks are connected in parallel to a common pressure feed source via a three-port valve or via two two-port valves enabling pressure to be delivered simultaneously to all of the jacks (4, 9), with the order of operation being imposed automatically with priority being given to the first jack(s) (4) by virtue of its/their geometrical position.

3. A tipper device according to any one of the preceding claims, **characterized by** the fact that the point where the second jack (9) is attached to the element that is to be tipped (13) is situated about one-third of the length of said element (13) from the front end of the element (13).

4. A device according to any one of the preceding claims, **characterized by** the fact that the element to be tipped is constituted by a tipping frame (13) hinged at its rear end to the chassis of the vehicle.

5. A device according to any one of the preceding claims, **characterized by** the fact that the first and second jacks (4, 9) are double-acting jacks, used as single-acting jacks.
